(19) Europäisches Patentamt
European Patent Office
Office européen des brevets

(11) **EP 4 439 151 A1**

(12) **EUROPEAN PATENT APPLICATION**

(43) Date of publication:
**02.10.2024 Bulletin 2024/40**

(21) Application number: **23198231.5**

(22) Date of filing: **19.09.2023**

(51) International Patent Classification (IPC):
*G02B 27/01* (2006.01)    *G02B 6/00* (2006.01)

(52) Cooperative Patent Classification (CPC):
**G02B 27/0172;** G02B 5/26; G02B 2027/0123;
G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.03.2023 US 202318126667**

(71) Applicant: II-VI Delaware, Inc.
**Wilmington, DE 19890 (US)**

(72) Inventors:
• **IAZIKOV, Dmitri
Wilmington, 19801 (US)**

• **HERRIT, Gary L.
Wilmington, 19801 (US)**
• **BARBAROSSA, Giovanni
Wilmington, 19801 (US)**
• **GREINER, Christoph
Wilmington, 19801 (US)**
• **MARTIN, Tony
Wilmington, 19801 (US)**
• **KIRKPATRICK, Scott R.
Wilmington, 19801 (US)**
• **POND, Brad
Wilmington, 19801 (US)**

(74) Representative: **Schmidt, Christian
ZSP Patentanwälte PartG mbB
Hansastraße 32
80686 München (DE)**

(54) **DISPLAY DEVICE COMPRISING GUIDE WITH REFLECTIVE COATINGS**

(57)    A display device may include a guide, a back side coating, a front side coating, an input couple, and output coupler, and an image source. The guide may include a guide front side and a guide back side opposite the guide front side. The back side coating may line the guide back side and may reflect rays in a first waveband. The front side coating may line the guide front side and may reflect rays in a second waveband. The image source may emit rays toward the guide. The input coupler may receive the rays emitted by the image source and couple the rays into the guide. The output coupler may receive rays propagated along the guide between the guide back side and the guide front side and emit the received rays from the guide front side.

**EP 4 439 151 A1**

## Description

## BACKGROUND

Some augmented reality (AR) devices, mixed reality (MR) devices, and virtual reality (VR) devices comprise visual displays that utilize lightguides or waveguides, collectively referred to hereafter as "guides." Such visual displays generally couple light into a guide, propagate such light along the guide to another location using total internal reflection (TIR) of the guide, and out-couple the light from the guide to a user. Because confinement within the guide is based on TIR, the refractive index of the material used to implement the guide affects performance characteristics of the guide. Namely, a higher index material provides a wider range of angles at which light propagate within the guide, which in turn provides a wider field-of-view (FOV) or a wider generated image. Moreover, applications beyond AR, MR, and VR devices may benefit from confinement in a guide of light of certain wavelengths or ranges of wavelengths while permitting light of other wavelengths or ranges of wavelengths to pass through the guide.

However, high index materials (*e.g.,* materials with a refractive index greater than 2) are generally more expensive than materials having a lower refractive index. As such, high index materials are generally cost prohibitive for AR devices, MR devices, and/or VR devices intended for general consumer availability. Also, guides are intrinsically limited in the range of angles that light may be confined by TIR effects.

## BRIEF SUMMARY OF THE DISCLOSURE

Shown in and/or described in connection with at least one of the figures, and set forth more completely in the claims are display devices with guides that propagate rays from one or more image sources to an observer by using a combination of refractive index interfaces and reflective coatings. The reflective coatings may complement the refractive index interfaces and increase the angles at which rays propagate through the guide. In this manner, the display devices may provide a wider field-of-view (FOV) or a wider generated image than is otherwise possible with guides formed from low index material.

These and other advantages, aspects and novel features of the present disclosure, as well as details of illustrated embodiments thereof, will be more fully understood from the following description and drawings.

## BRIEF DESCRIPTION OF THE DRAWINGS

Various features and advantages of the present disclosure may be more readily understood with reference to the following detailed description taken in conjunction with the accompanying drawings, wherein like reference numerals designate like structural elements.

FIG. 1 depicts a block diagram of a computing device comprising a display device.
FIG. 2A depicts an embodiment of a display device that is suitable for the display device of FIG. 1, wherein the display device has a guide with reflective coatings.
FIG. 2B depicts a graph of transmission properties for the reflective coatings of the display device in FIG. 2A.
FIG. 3A depicts an embodiment of a display device that is suitable for the display device of FIG. 1, wherein the display device has a guide with reflective coatings.
FIG. 3B depicts a graph of transmission properties for the reflective coatings of the display device in FIG. 3A.
FIG. 4A depicts an embodiment of a display device suitable for the display device of FIG. 1, wherein the display device has multiple guides each with reflective coatings.
FIG. 4B, 4C, and 4D each depict a graph of transmission properties for reflective coatings of respective guides of the display device in FIG. 4A.
FIG. 5 depicts an embodiment of a head-mounted display device suitable for the display device of FIG. 1.
FIGS. 6A and 6B illustrate Snell's Law and the effect of stacking material layers on rays passing through the material layers.
FIG. 7 illustrates how reflective coatings may increase a range of angles at which guides of the display devices of FIGS. 2A, 3A, 4A, and 5 may internally reflect rays.

## DESCRIPTION

The following discussion provides various examples of display devices and various examples of computing devices with such display devices. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "and/or" means any one or more of the items in the list joined by "and/or". As an example, "x and/or y" means any element of the three-element set {(x), (y), (x, y)}. As another example, "x, y, and/or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Aspects of the present disclosure are directed to a display device or another device. Such a device may comprise a guide, a back side coating, a front side coating, an input coupler, an output coupler, and an image source. The guide may comprise a guide front side and a guide back side opposite the guide front side. The back side coating may line or coat the guide back side and may reflect rays in a first waveband. The front side coating may line or coat the guide front side and may reflect rays in a second waveband. The image source may emit rays toward the guide. The input coupler may receive the rays emitted by the image source and couple the rays into the guide. The output coupler may receive rays propagated along the guide between the guide back side and the guide front side and emit the received rays from the guide front side. Some embodiments of a display device or other device may utilize other techniques for coupling light into the guide. For example, such devices may place the light source inside the guide, couple light into an edge of the guide, or using a prism to couple light into the guide. Conversely, some embodiments of a display device or other device may utilize other techniques for coupling light out of the guide and/or to a sensor. For example, such devices may place the sensor inside the guide, couple light out of an edge of the guide, or use a prism to couple light out of the guide.

Further aspects of the present disclosure are directed to a method of a display device or another device. The method may include emitting rays from an image source, and coupling the rays from the image source into a guide comprising a guide front side with a front side coating and a guide back side with a back side coating. The method may also include reflecting a first portion of the rays between the guide front side and the guide back side based on refractive index interfaces of the guide front side and the guide back side, and reflecting a second portion of the rays between the front side coating and the back side coating based on a common reflective waveband of the front side coating and the back side coating. Further, the method may include out-coupling the first portion and the second portion of the rays from the guide front side. Some example methods of a display device or other device may utilize other techniques for coupling light into the guide. For example, such methods may include placing the light source inside the guide, coupling light into an edge of the guide, or using a prism to couple light into the guide. Conversely, some example methods of a display device or another device may utilize other techniques for coupling light out of the guide and/or to a sensor. For example, such methods may include placing the sensor inside the guide, coupling light out of an edge of the guide, or using a prism to couple light out of the guide.

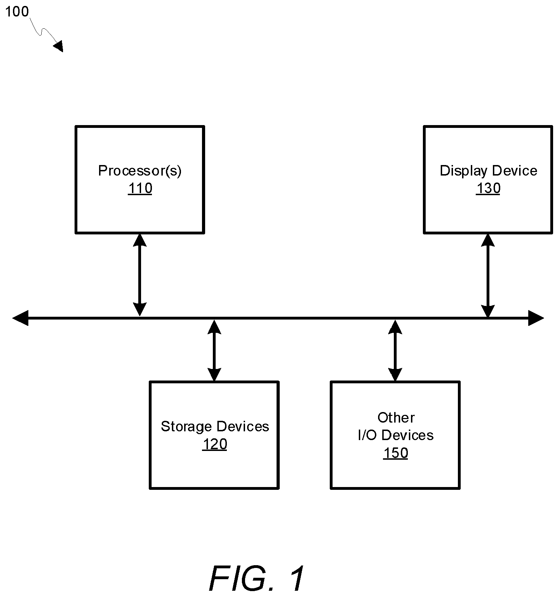

Referring to FIG. 1, a block diagram of a computing device 100 is shown. The computing device 100 may include one or more processors 110, one or more storage devices 120, a display device 130, and various input/output (I/O) devices 150. In various embodiments, the computing device 100 may be implemented as an augmented reality (AR) device, a mixed reality (MR) device, a virtual reality (VR) device, or some other computing device form factor.

The computing device 100 may include buses and/or other interconnects that operatively couple the processor(s) 110, storage device(s) 120, display device 130, and I/O device(s) 150 to one another. A processor 110 may be configured to execute instructions, manipulate data, and control operation of other components of the computing device 100 as a result of executing such instructions. To this end, the processors 110 may include a general purpose processor such as, for example, an x86 processor, an ARM processor, etc., which are available from various vendors. However, the processor 110 may also be implemented using an application specific processor and/or other analog and/or digital logic circuitry.

The storage devices 120 may include one or more volatile storage devices and/or one or more nonvolatile storage devices. In general, a storage device 120 may store software and/or firmware instructions, which may be executed by a processor 110. The storage devices 120 may store various types of data which the processor 110 may access, modify, or otherwise manipulate in response to executing instructions. To this end, the storage device 120 may include random access memory (RAM) device(s), read only memory (ROM) device(s), sold state device (SSD) drive(s), flash memory device(s), etc. In some embodiments, one or more devices of the storage devices 120 may be integrated with one or more processors 110.

The display device 130 may emit light rays to present images and/or other visual output. In particular, the display device 130 may emit such rays in response to the processor 110 executing instructions. As explained in greater detail below, the display device 130 may include a guide along which rays from an image source is propagated to a front side of the display device 130.

The other I/O devices 150 may provide devices which enable a user or another device (e.g., another computing device, networking device, etc.) to interact with the computing device 100. For example, the I/O devices 150 may include buttons, touch screens, keyboards, microphones, audio speakers, etc. via which a person may interact with the computing device 100. The I/O devices 150 may also include network interfaces that permit the computing device 100 to communicate with other computing devices and/or networking devices. To this end, the networking interfaces may include a wired networking interface such as an Ethernet (IEEE 802.3) interface; a wireless networking interface such as a WiFi (IEEE 802.11) interface, BlueTooth (IEEE 802.15.1) interface; a radio or mobile interface such as a cellular interface (GSM, CDMA, LTE, *etc.*), and/or some other type of networking interface capable of providing a communications link between the computing device 100 and another computing device and/or networking device.

The above describes aspects of the computing device 100. However, there may be significant variation in actual implementations of the computing device 100. For example, a head set implementation of the computing device 100 may use vastly different components and may have a vastly different architecture than a smart phone implementation of the computing device 100. Despite such differences, computing devices still generally include processors that execute software and/or firmware instructions in order to implement various functionality. As such, the above described aspects of the computing device 100 are not presented from a limiting standpoint but from a generally illustrative standpoint.

Certain aspects of the present disclosure may be especially useful for computing devices implemented as AR devices, MR devices, or VR devices. Certain aspects of the present disclosure may also be beneficial for display devices of cell phones, computer monitors, tablets, or other devices that may utilize a guide or an optical transport layer for light projection or light reception. However, the present disclosure envisions that aspects will find utility across a vast array of different computing devices, computing platforms, and/or other environments and the intention is not to limit the scope of the present disclosure to a specific computing device, computing platform, and/or environment beyond any such limits that may be found in the appended claims.

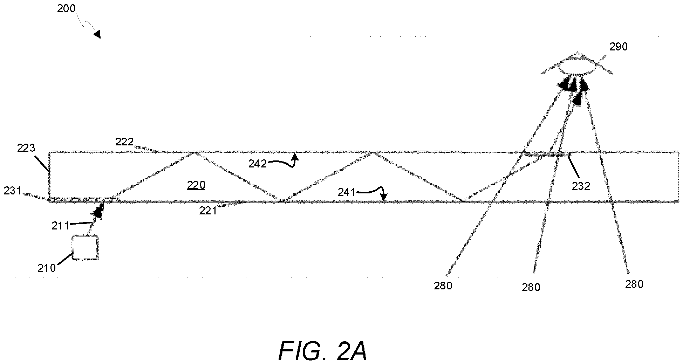

Referring now to FIG. 2A, a display device 200 is shown. The display device 200 may be suitable for implementing the display device 130 of FIG. 1. The display device 200 may comprise an image source 210, a guide 220, an input coupler 231, an output coupler 232, a back side reflective coating 241, and a front side reflective coating 242. The image source 210 may comprise a liquid-crystal display (LCD) device, a liquid-crystal on silicon (LCoS) device, a light-emitting diode (LED) device, an organic light-emitting diode (OLED) device, a quantum dot device, interferometric modulator device, or other image generating device.

The guide 220 may comprise one or more dielectric layers that define a guide back side 221, a guide front side 222 opposite the guide back side 221, and a guide sidewall 223 between the guide back side 221 and the guide front side 222. The guide 220 may further include the input coupler 231 along the guide back side 221 and the output coupler 232 along the guide front side 222.

The guide 220 may include a back side reflective coating 241 along the guide back side 221 and a front side reflective coating 242 along the guide front side 222. The image source 210 may be positioned below or behind the guide back side 221 such that light or other electromagnetic ray(s) 211 emitted by the image source 210 are aligned with the input coupler 231.

The guide back side 221, the guide front side 222, and their respective coatings 241, 242 may cooperate to trap rays 211 within the guide 220 and route the trapped rays 211 from the input coupler 231 to the output coupler 232. In various embodiments, thicknesses of the one or more dielectric layers forming the guide 220 may be defined such that the guide 220 supports propagation of a discrete set of modes or a continuum of modes.

The input coupler 231 may be positioned along the guide back side 221. The input coupler 231 may be constructed to permit rays 211 emitted by the image source 210 to enter the guide 220 via the guide back side 221. In some embodiments, the input coupler 231 may be positioned along other sides and/or surfaces (e.g., guide sidewall 223) of the guide 220 to receive rays 211 emitted by an image source aligned with such side of the guide 220. Conversely, the output coupler 232 may be positioned along the guide front side 222. The output coupler 232 may be constructed to permit rays 211 to exit the guide 220 via the guide front side 222. In some embodiments, the output coupler 232 may be positioned along other sides and/or surfaces (e.g., guide sidewall 223) of the guide 220 to permit rays 211 to exit via such side of the guide 220.

The couplers 231, 232 may be prismatic couplers, diffractive couplers, metasurface couplers, or other types of optical couplers known in the art. The couplers 231, 232 may be embedded in one or more layers of the guide 220, etched into one or more layers of the guide 220, or mounted on the guide front side 222, the guide back side 221, or the guide sidewall 223. As such, the guide 220 may provide out-coupling of the rays 211 from the guide front side 222.

While depicted with a single input coupler 231 and a single output coupler 232, the display device 200 may include multiple input couplers 231 and/or output couplers 232, thus providing the guide 220 with multiple in-coupling and/or out-coupling regions. Moreover, the output coupler 232 may be designed to have multiple out-coupling or uncoupling regions. Multiple out-coupling or uncoupling regions may be useful, for example, to expand the spatial extent of the out-coupling area by out-coupling rays on several bounces within the guide 220.

For clarity, FIG. 2A depicts a single ray 211 generated by the image source 210. However, in various embodiments, the image source 210 may generate a number of rays 211 within a certain field-of-view (FOV). Moreover, the image source 210 may generate rays 211 of multiple wavelengths.

The output coupler 232 may be designed to minimize interference with light rays from its surrounding environment (e.g., light rays from the outside world) that pass through the guide 220. Hereafter, such light rays are referred to as world light 280. In particular, by choosing an appropriate grating pitch and/or reducing an index contrast of the output coupler 232, the output coupler 232 may be placed without interfering or appreciably interfering with the world light 280. The output coupler 232 may extend to cover a large portion of the guide front side 222 or may be confined to discrete areas of the guide 220 as shown.

If the couplers 231, 232 are implemented as diffraction grating couplers having a same period, rays 211 emitted by the display device 200 should experience little to no distortion due to diffraction grating dispersion. However, if the period of the input coupler 231 differs from the period of the output coupler 232, then the rays 211 may experience image distortion due to mismatched dispersion of the couplers 231, 232. Similarly, if the input coupler 231 is implemented as prism coupler and the output coupler 232 is implemented as a grating coupler or vice versa, the resulting signal emitted by the display device 200 may experience image distortion due to mismatched dispersion of the couplers 231, 232. As such, the display device 200 may include other elements such as optical elements embedded in the guide 220 that compensate for such distortion. Moreover, software executed by the processor 110 and used to drive the image source 210 may alter the rays 211 emitted by the image source 210 so as to compensate for such distortion.

For MR devices and VR devices, the display device 200 generally provides the observer 290 with rays generated by the image source 210 without concern for providing the observer 290 with rays from another source. For example, the display device 200 of an MR device or VR device may not provide the observer 290 with world light 280. As such, the display device 200 for such devices need not permit world light 280 to pass through the guide back side 221 and out the guide front side 222 to the observer 290. As such, the reflective coatings 241, 242 of such devices may each have an arbitrary wide reflective waveband (e.g., the entire visible light waveband).

Conversely, for an AR device, the display device 200 may provide the observer 290 with not only rays emitted from the image source 210, but also provide the observer 290 with world light 280. For such an AR device, the reflective coatings 241, 242 may span a fraction of the visible light waveband and generally permit the passage of world light 280 through the guide back side 221, out the guide front side 222, and to the observer 290. In this manner, the observer 290 may simultaneously observe rays from both the image source 210 and the surrounding environment. While world light transmission may not be essential for MR devices and/or VR devices, the reflective coatings 241, 242 of the display device 200 for some embodiments of MR and/or VR devices may similarly span a fraction of the visible light waveband range in a manner similar to AR devices.

For example, the reflective coatings 241, 242 may be designed to have high reflection (low transmission) over the green (G) waveband and a range of operating angles produced by image source 210 and the input coupler 231. Moreover, the reflective coatings 241, 242 may be designed to have high transmission over other visible light wavebands. Due to such reflectivity, the reflective coatings 241, 242 may generally permit world light 280 from the surrounding environment to pass through the guide 220 to the observer 290 while also propagating rays in the green (G) waveband from the image source 210 to the observer 290.

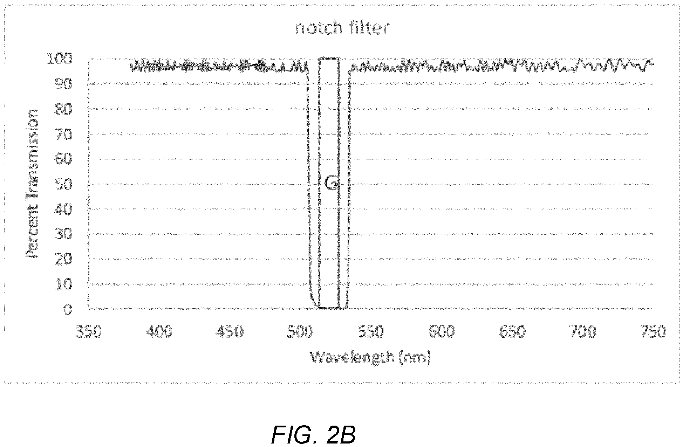

The graph of FIG. 2B depicts such reflectivity of the coatings 241, 242. Shown values for the green (G) waveband, coating reflection band, and reflection/transmission values of the graph are merely exemplary and not intended to limit the present disclosure unless specifically present in the appended claims. In various embodiments, the coatings 241, 242 may account for possible batch-to batch and/or temperature variations of green (G) waveband rays emitted by the image source 210. Similarly, the reflectivity waveband of the coatings 241, 242 may account for possible temperature shifts and changes in the angle of incidence of rays on the coatings 241, 242.

In various embodiments, the coatings 241, 242 are implemented in the same manner. As such, the coatings 241, 242 provide the same or substantially the same reflective waveband and thus cooperate to propagate rays 211 within the reflective waveband of the coatings 241, 242. In some embodiments, the coatings 241, 242 may provide different reflective wavebands. In such embodiments, the coatings 241, 242 the coatings 241, 242 may cooperate to propagate rays 211 within a common waveband (e.g., a portion of the two wavebands that overlap).

In various embodiments, the coatings 241, 242 may comprise alternating layers of dielectric materials and/or metallic materials of different refractive indices. For example, the coatings 241, 242 may comprise alternating layers of higher index materials and lower index materials. In such embodiments, the higher index materials may be selected from tantalum oxide, titanium oxide, silicon carbide, silicon nitride, aluminum nitride, etc. The lower index materials may be selected from epoxy, aluminum oxide, silicon oxide, etc.

The structure of alternating layers may provide the coatings 242, 242 with a reflective structure in which alternating layers have a layer thickness of approximately a certain wavelength for light of a corresponding wavelength to be reflected. For example, a region of interest may be provided with quarter wavelength stacks comprising a layer thickness of one quarter of the reflected wavelength. In such embodiments, in order to reduce the width of the region, the layers of the stack may be shifted from the quarter wavelength such that one of the layer types (*e.g.,* a higher index material layer or a lower index material layer) provides a layer thickness of approximately 1.5 or more quarter wavelengths, while the other layer type may provide a layer thickness reduced from a quarter wavelength to as little as one tenth of a quarter wavelength or less.

A guide 220 formed from high index materials (*e.g.,* materials having a refractive index greater than 2) may propagate rays at a wider range of angles than a guide 220 formed from a lower index material. While a wider range of angles may be desirable in order to provide the display device 200 with a wider field-of-view (FOV), high index materials are generally more expensive than lower index materials. Moreover, merely forming the guide 220 from several layers of lower refractive index materials does not provide a wider range of angles at which rays propagates through the guide 220.

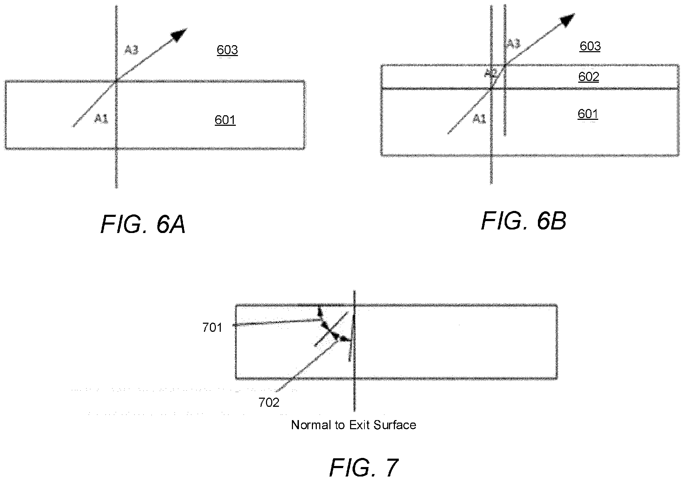

A layer of material 601 is shown in FIG. 6A with rays exiting to an ambient media 603 at an in-media angle A1 to normal. If the material 601 has a refractive index N1 and the ambient media 603 has a refractive index N3, the final exit angle A3 will not change if a layer of material 602 with refractive index N2 is added. See, *e.g.,* FIG. 6B. According to Snell's law:

$$N1*sin(A1) = N2*sin(A2) = N3*sin(A3)$$

Thus, one may not increase the field-of-view of the display device 200 by simply stacking additional layers of lower index materials on the guide 220.

Accordingly, the display device 200 comprises the reflective coatings 241, 242 to complement or increase the range of angles reflected by the guide 220 due to its refractive index interfaces. As shown in FIG. 7, the refractive index interface of the guide 220 may provide a first range 701 of angles at which rays are internally reflected. The coatings 241, 242 may be designed to internally reflect rays at a second range 702 of angles. As shown, the reflective coatings 241, 242 may be designed such that the second range 702 of angles includes additional angles not present in the first range 701 of angles provided by the refractive index interface. To this end, the ranges 701, 702 may be distinct or partially overlap. The net result is the refractive index interface and coatings 241, 242 cooperate to increase the angles at which rays 211 are internally reflected and therefore provide display device 200 with a wider field-of-view.

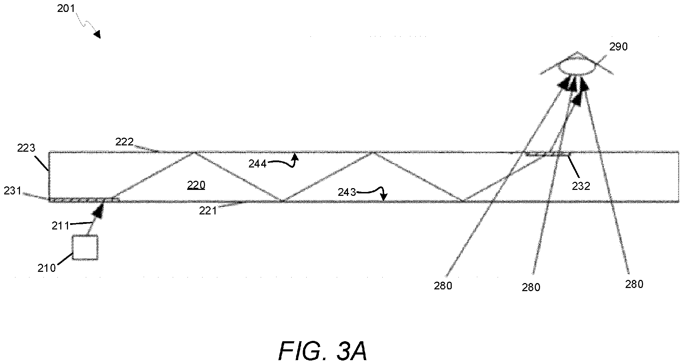

Referring now to FIG. 3A, another embodiment of a display device is shown. The display device 201 may be suitable for implementing the display device 130 of FIG. 1. As shown, the display device 201 may comprise an image source 210, a guide 220, an input coupler 231, an output coupler 232, a back side reflective coating 243, and a front side reflective coating 244. The image source 210 may comprise a liquid-crystal display (LCD) device, a liquid-crystal on silicon (LCoS) device, a light-emitting diode (LED) device, an organic light-emitting diode (OLED) device, a quantum dot device, interferometric modulator device, or other image generating device.

The display device 201 may be implemented in a similar manner as display device 200. However, the coatings 243, 244 of display device 201 differ from the coating 243, 244 of display device 200. In particular, the coatings 243, 244 may be designed to have high reflection (low transmission) over a red (R) waveband and a blue (B) waveband in addition to the green (G) waveband of coatings 241, 242. Moreover, the reflective coatings 243, 244 may be designed to have high transmission over other visible light wavebands. Due to such reflectivity, the reflective coatings 243, 244 may generally permit world light 280 from the surrounding environment to pass through the guide 220 to the observer 290 while also propagating rays in the red (R), green (G), blue (B) wavebands from the image source 210 to the observer 290.

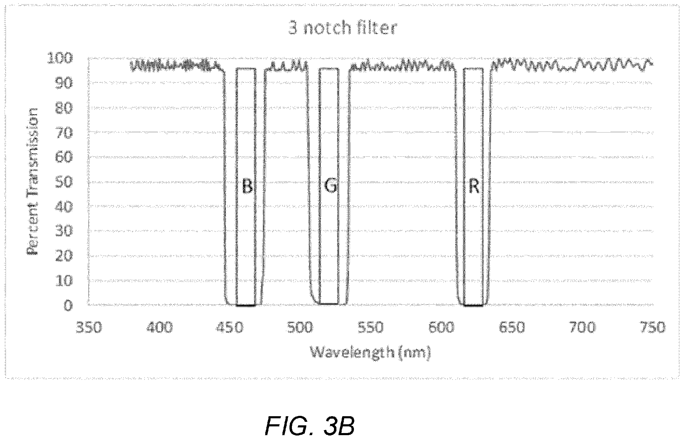

The graph of FIG. 3B depicts such reflectivity of the coatings 243, 244. Shown values for the red (R), green (G), and blue (B) wavebands, coating reflection band, and reflection/transmission values of the graph are merely exemplary and not intended to limit the present disclosure unless specifically present in the appended claims. In various embodiments, the coatings 243, 244 may account for possible batch-to batch and/or temperature variations of the rays emitted by the image source 210 in the red (R), green (G), and/or blue (B) wavebands. Similarly, the reflectivity waveband of the coatings 243, 244 may account for possible temperature shifts and changes in the angle of incidence of rays on the coatings 243, 244.

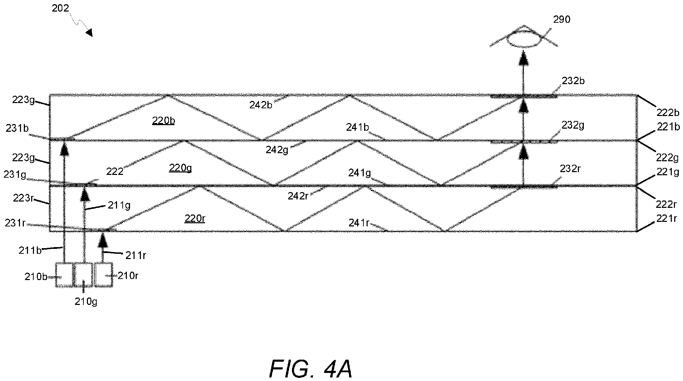

Referring now to FIG. 4A, another embodiment of a display device is shown. The display device 202 may be suitable for implementing the display device 130 of FIG. 1. As shown, the display device 202 may comprise image sources 210r, 210g, 210b, guides 220r, 220g, 220b, input couplers 231r, 231g, 231b, output couplers 232r, 232g, 232b, back side reflective coatings 241r, 241g, 241b, and front side reflective coatings 242r, 242g, 242b. The image sources 210r, 210g, 210b may be positioned below or behind a guide back side 221r.

Each guide 220r, 220g, 220b may be implemented similar to the guide 220 of display device 200. In particular, each guide 220r, 220g, 220b may have a respective guide back side 221r, 221g, 221b, a respective guide front side 222r, 222g, 222b opposite its respective guide back side 221r, 221g, 221b, and a respective guide sidewall 223r, 223g, 223b between its respective guide back side 221r, 221g, 221b and its respective guide front side 222r, 222g, 222b. Each guide 220r, 220g, 220b may further include a respective input coupler 231r, 231g, 231b along its guide back side 221r, 221g, 221b and a respective output coupler 232r, 232g, 232b along its guide front side 222r, 222g, 222b.

Each guide 220r, 220g, 220b may include a respective back side reflective coating 241r, 241g, 241b along its guide back side 221r, 221g, 221b and a front side reflective coating 242r, 242g, 242b along its guide front side 222r, 222g, 222b. Each image source 210r, 210g, 210b may be positioned below or behind the guide back side 221r such that ray(s) 211r, 211g, 211b emitted by the image sources 210r, 210g, 210b are aligned with a respective input coupler 231r, 231g, 231b. In this manner, ray(s) 211r, 211b, 211g may be in-coupled to a respective guide 220r, 220b, 220g. While depicted as three distinct image sources, the image sources 210r, 210g, 210b in some embodiments may be provided by a single imaging device.

The output couplers 232r, 232g, 232b of the guides 220r, 220g, 220b may be vertically aligned with each other such that out-coupled rays of lower guides pass through output couplers of higher guides. In particular, the guide 220b may be positioned over the guide 220g and the output coupler 232b of the guide 220b may be positioned over the output coupler 232g of the guide 220g. Further, the guide 220g may be positioned over the guide 220r and the output coupler 232g of the guide 220g may be positioned over the output coupler 232r of the guide 220r. In this manner, out-coupled rays 211r of the guide 220r may pass through guides 220g, 220b positioned above the guide 220r and their respective output couplers 232g, 232b that are positioned above the guide 220r. Similarly, out-coupled rays 211g of the guide 220g may pass through the guide 220b positioned above the guide 220g and its output couplers 232b. As such, an observer 290 may receive rays 211r, 211g, 211b of the image sources 210r, 210g, 210b via the guide front side 222b.

The display device 202 may transport rays 211r, 211b, 211g from the image sources 210r, 210g, 210b to the observer 290. In particular, the display device 202 may couple rays 211r, 211g, 211b into respective guides 220r, 220g, 220b via input couplers 231r, 231g, 231b. Total internal reflection (TIR) of the guides 220r, 220g, 220b and reflectivity of their coatings may combine to trap and propagate the rays 211r, 211g, 211b from input couplers 231r, 231g, 231b to output couplers 232r, 232g, 232b. The output couplers 232r, 232g, 232b may then emit or out-couple the rays 211r, 211g, 211b from their guide front side 222r, 222g, 222b to the observer 290.

As depicted in FIG. 4A, the display device 202 may support three different wavebands (e.g., red, green, blue). However, the display device 202 may be implemented with an arbitrary number of wavebands by using an appropriate number of guides. Moreover, in an example embodiment, the guide 220b comprises a guide front side 222b that interfaces with the external environment (*e.g.,* air). In some embodiments, an air gap is maintained between each guide 220r, 220g, 220b to ensure that both the guide front sides 222r, 222g, 222b and the guide back sides 221r, 221g, 221b interface a medium (*e.g.,* air) having a same refractive index. This ensures that the front side and back side of each guide 220r, 220g, 220b provides a same internal refraction.

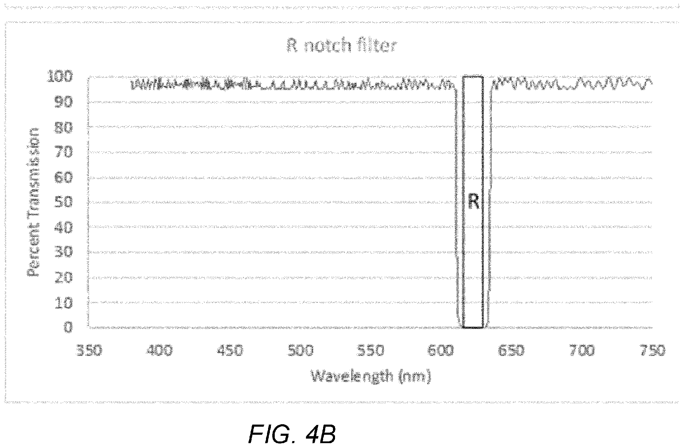

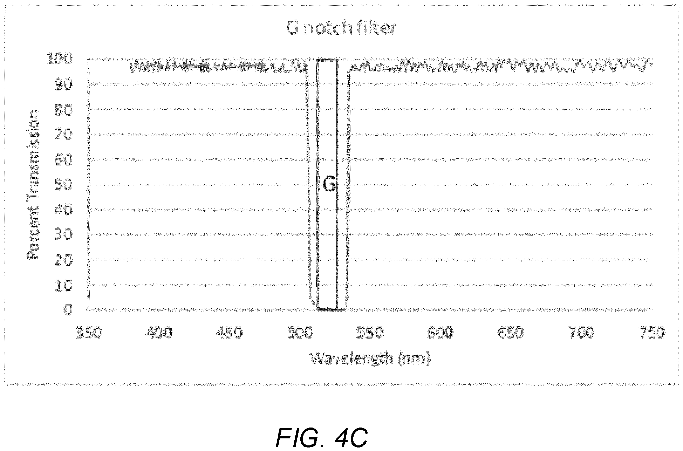

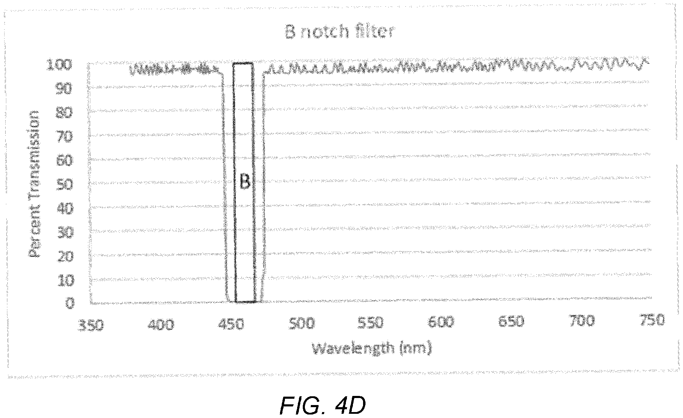

The graph of FIG. 4B depicts reflectivity of the coatings 241r, 242r. The graph of FIG. 4C depicts reflectivity of the coatings 241g, 242g. The graph of FIG. 4D depicts reflectivity of the coatings 241b, 242b. Shown values for the respective wavebands (*e.g.,* red (R), green (G), and blue (B)), coating reflection band, and reflection/transmission values of the graphs are merely exemplary and not intended to limit the present disclosure unless specifically present in the appended claims. In various embodiments, the coatings may account for possible batch-to-batch and/or temperature variations of the waveband of rays emitted by the respective image source 210r, 210g, 210b. Similarly, the reflectivity waveband of the coatings 241r, 241g, 241b, 242r, 242g, 242g may account for possible temperature shifts and changes in the angle of incidence of rays on the coatings 241r, 241g, 241b, 242r, 242g, 242g.

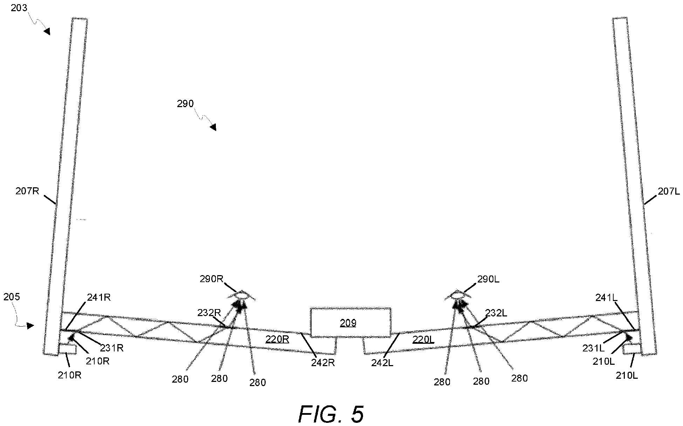

Referring now to FIG. 5, another embodiment of a display device is shown. The display device 203 may be suitable for implementing the display device 130 of FIG. 1. The display device 203 may comprise a first display device 203R for a first eye 290R of an observer 290 and a second display device 203L for a second eye 290L of the observer 290. In various embodiments, the display device 203 may be implemented as a head-mounted device such as eyeglasses, a visor, a headset, or other AR/MR/VR display device form factor. To this end, the display device 203 may comprise a frame 205 having arms 207R, 207L and a bridge 209. The arms 207R, 207L may be positioned proximate outer ends of the display devices 203R, 203L and the bridge 209 may span between inner ends of the display device 203R, 203L. The frame 205 may hold and position the first display device 203R and the second display device 203L on a face of the observer 290. In particular, the observer 290 may place the arms 207R, 207L over their ears and the bridge 209 over the bridge of their nose to respectively position the first display device 203R and the second display device 203L in front of their eyes 290R, 290L.

As depicted, each display device 203R, 203L may be implemented similarly to the display device 200. Namely, the first display device 203R may comprise an image source 210R, a guide 220R, an input coupler 231R, an output coupler 232R, a back side reflective coating 241R, and a front side reflective coating 242R. Similarly, the second display device 203L may comprise an image source 210L, a guide 220L, an input coupler 231L, an output coupler 232L, a back side reflective coating 241L, and a front side reflective coating 242L.

In some embodiments, the display device 203 may include additional AR/MR/VR components such as, for example, eye tracking module(s), 3D sensing module(s), remote controller module(s), video camera(s), microphone(s), and/or speaker(s). For AR applications, the display devices 203R, 203L may be implemented to permit passage of world light 280 through their respective guides 220R, 220L to the eyes 290R, 290L of the observer 290. For VR or MR application, the display device 203R, 203L may be implemented to prevent passage of world light 280 through their respective guides 220R, 220L. As such, the coatings 241R, 241L, 242R, 242L may be implemented with a high reflectivity waveband that is wider than the green (G) waveband of the display device 200. In some embodiments, the high reflectivity waveband of the coatings 241R, 241L, 242R, 242L may span the full visible light waveband.

The present disclosure includes reference to certain examples, however, it will be understood by those skilled in the art that various changes may be made and equivalents may be substituted without departing from the scope of the disclosure. In addition, modifications may be made to the disclosed examples without departing from the scope of the present disclosure. For example, the display devices 200, 201, 202, 203 possess various described features. Additional display device embodiments may mix, match, and/or otherwise combine features from the display devices 200, 201, 202, 203. Therefore, it is intended that the appended claims not be limited to the examples disclosed, but instead encompass all embodiments that fall within their respective scope.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. The aspects are:

1. A device, comprising:

a guide comprising a guide front side and a guide back side opposite the guide front side;
a back side coating along the guide back side and configured to reflect rays in a first waveband; and
a front side coating along the guide front side and configured to reflect rays in a second waveband;

wherein the front side coating and the back side coating confine light propagating within the guide.

2. The device of aspect 1, comprising:

an image source configured to emit rays toward the guide;
an input coupler configured to receive the rays emitted by the image source and couple the rays into the guide; and
an output coupler configured to receive rays propagated along the guide between the guide back side and the guide front side and emit the received rays from the guide front side.

3. The device of aspect 1, wherein:

the guide provides refractive index interfaces that internally reflect a first portion of the rays within a first range of angles; and
the back side coating and the front side coating cooperate to provide internal reflection for a second portion of the rays within a second range of angles.

4. The device of aspect 3, wherein the first range of angles and the second range of angles overlap.

5. The device of aspect 3, wherein the first range of angles and the second range of angles are non-overlapping.

6. The device of aspect 3, wherein the second range of angles are at least partially outside of the first range of angles.

7. The device of aspect 1, wherein the front side coating and the back side coating each comprises one or more dielectric layers.

8. The device of aspect 1, wherein the front side coating and the back side coating each comprises one or more metallic layers.

9. The device of aspect 1, wherein the first waveband and the second waveband overlap.

10. The device of aspect 1, wherein the first waveband and the second waveband are substantially identical.

11. The device of aspect 1, wherein:

the back side coating is configured to reflect rays of a first plurality of non-overlapping wavebands that include the first waveband;
the front side coating is configured to reflect rays of a second plurality of non-overlapping wavebands that include the second waveband.

12. The device of aspect 11, wherein each waveband of the first plurality of non-overlapping wavebands is substantially identical to a correspond waveband of the second plurality of non-overlapping wavebands.

13. The device of aspect 1, comprising:

a second guide comprising a second guide front side and a second guide back side opposite the second guide front side;
a second back side coating along the second guide back side and configured to reflect rays in a third waveband;
a second front side coating along the second guide front side and configured to reflect rays in a fourth waveband;
a second image source configured to emit rays toward the second guide;
a second input coupler configured to receive the rays emitted by the second image source and couple the rays into the second guide; and
a second output coupler configured to receive rays propagated along the second guide between the second guide back side and the second guide front side and emit the received rays from the second guide front side.

14. The device of aspect 13, comprising a frame, wherein the frame includes:

a first arm proximate a first end of the guide;
a second arm proximate a first end of the second guide; and
a bridge between a second end of the guide and a second end of the second guide.

15. The device of aspect 13, wherein:

the second guide back side is positioned over the guide front side;
the second input coupler is positioned between the second guide back side and the guide front side; and
the output coupler is positioned between the second guide back side and the guide front side.

16. The device of aspect 15, comprising an air gap between the second guide back side and the guide front side.

17. The device of aspect 13, comprising

a third guide comprising a third guide front side and a third guide back side opposite the third guide front side;
a third back side coating along the third guide back side and configured to reflect rays in a fifth waveband;
a third front side coating along the third guide front side and configured to reflect rays in a sixth waveband;

a third image source configured to emit rays toward the second guide;
a third input coupler configured to receive the rays emitted by the second image source and couple the rays into the third guide; and
a third output coupler configured to receive rays propagated along the third guide between the third guide back side and the third guide front side and emit the received rays from the third guide front side.

18. The device of aspect 17, wherein:

the first waveband and the second waveband correspond to a red waveband;
the third waveband and the fourth waveband correspond to a green waveband; and
the fifth waveband and the sixth waveband correspond to a blue waveband.

19. The device of aspect 17, comprising an imaging device, wherein the imaging device includes the image source, the second image source, and the third image source.

20. The device of aspect 1, wherein:

the front side coating permits passage of light of a third waveband through the front side coating; and
the back side coating permits passage of light of a fourth wave band through the back side coating.

21. A method, comprising:

emitting rays from an image source;
coupling the rays from the image source into a guide comprising a guide front side with a front side coating and a guide back side with a back side coating;
reflecting a first portion of the rays between the guide front side and the guide back side based on refractive index interfaces of the guide front side and the guide back side;
reflecting a second portion of the rays between the front side coating and the back side coating based on a common reflective waveband of the front side coating and the back side coating; and
out-coupling the first portion and the second portion of the rays from the guide front side.

22. The method of aspect 21, wherein:

the reflecting the first portion of the rays comprises reflecting rays within a first range of angles; and
the reflecting the second portion of the rays comprises reflecting rays within a second range of angles.

23. The method of aspect 21, wherein:

the reflecting the first portion of the rays comprises reflecting rays within a first range of angles; and
the reflecting the second portion of the rays comprises reflecting rays within a second range of angles that overlaps the first range of angles.

24. The method of aspect 21, wherein:

the reflecting the first portion of the rays comprises internal reflecting rays within a first range of angles; and
the reflecting the second portion of the rays comprises internally reflecting rays within a second range of angles that does not overlap the first range of angles.

25. The method of aspect 21, comprising:

emitting second rays from a second image source;
coupling the second rays into a second guide comprising a second guide front side with a second front side coating and a second guide back side with a second back side coating;
reflecting a first portion of the second rays between the second guide front side and the second guide back side based on refractive index interfaces of the second guide front side and the second guide back side;
reflecting a second portion of the second rays between the second front side coating and the second back side coating based on a common reflective waveband of the second front side coating and the second back side coating; and
out-coupling the first portion and the second portion of the second rays from the second guide front side.

Implementations as described herein may relate to the following: A display device may include a guide, a back side coating, a front side coating, an input couple, and output coupler, and an image source. The guide may include a guide front side and a guide back side opposite the guide front side. The back side coating may line the guide back side and may reflect rays in a first waveband. The front side coating may line the guide front side and may reflect rays in a second waveband. The image source may emit rays toward the guide. The input coupler may receive the rays emitted by the image source and couple the rays into the guide. The output coupler may receive rays propagated along the guide between the guide back side and the guide front side and emit the received rays from the guide front side.

The present application claims priority of U.S. Patent Application No. 18/126,667, filed March 27, 2023, the entire disclosure of which is herewith explicitly incorporated by reference into the present application.

**Claims**

1. A device, comprising:

a guide comprising a guide front side and a guide back side opposite the guide front side;
a back side coating along the guide back side and configured to reflect rays in a first waveband; and
a front side coating along the guide front side and configured to reflect rays in a second waveband;
wherein the front side coating and the back side coating confine light propagating within the guide.

2. The device of claim 1, comprising:

an image source configured to emit rays toward the guide;
an input coupler configured to receive the rays emitted by the image source and couple the rays into the guide; and
an output coupler configured to receive rays propagated along the guide between the guide back side and the guide front side and emit the received rays from the guide front side.

3. The device of claim 1 or 2, wherein:

the guide provides refractive index interfaces that internally reflect a first portion of the rays within a first range of angles; and
the back side coating and the front side coating cooperate to provide internal reflection for a second portion of the rays within a second range of angles.

4. The device of claim 3, wherein

a) the first range of angles and the second range of angles overlap, and/or wherein
b) the first range of angles and the second range of angles are non-overlapping, and/or wherein
c) the second range of angles are at least partially outside of the first range of angles.

5. The device of any one of claims 1 to 4, wherein

a) the front side coating and the back side coating each comprises one or more dielectric layers, and/or wherein

b) the front side coating and the back side coating each comprises one or more metallic layers.

6. The device of any one of claims 1 to 5, wherein

a) the first waveband and the second waveband overlap and/or wherein

b) the first waveband and the second waveband are substantially identical.

7. The device of any one of claims 1 to 6, wherein:

the back side coating is configured to reflect rays of a first plurality of non-overlapping wavebands that include the first waveband;

the front side coating is configured to reflect rays of a second plurality of non-overlapping wavebands that include the second waveband, and optionally wherein

each waveband of the first plurality of non-overlapping wavebands is substantially identical to a correspond waveband of the second plurality of non-overlapping wavebands.

8. The device of any one of claims 1 to 7, comprising:

a second guide comprising a second guide front side and a second guide back side opposite the second guide front side;

a second back side coating along the second guide back side and configured to reflect rays in a third waveband;

a second front side coating along the second guide front side and configured to reflect rays in a fourth waveband;

a second image source configured to emit rays toward the second guide;

a second input coupler configured to receive the rays emitted by the second image source and couple the rays into the second guide; and

a second output coupler configured to receive rays propagated along the second guide between the second guide back side and the second guide front side and emit the received rays from the second guide front side.

9. The device of claim 8, comprising a frame, wherein the frame includes:

a first arm proximate a first end of the guide;

a second arm proximate a first end of the second guide; and

a bridge between a second end of the guide and a second end of the second guide.

10. The device of claim 8 or 9, wherein:

the second guide back side is positioned over the guide front side;

the second input coupler is positioned between the second guide back side and the guide front side; and

the output coupler is positioned between the second guide back side and the guide front side, and optionally wherein

the device comprises an air gap between the second guide back side and the guide front side.

11. The device of any one of claims 8 to 10, comprising

a third guide comprising a third guide front side and a third guide back side opposite the third guide front side;

a third back side coating along the third guide back side and configured to reflect rays in a fifth waveband;

a third front side coating along the third guide front side and configured to reflect rays in a sixth waveband;

a third image source configured to emit rays toward the second guide;

a third input coupler configured to receive the rays emitted by the second image source and couple the rays into the third guide; and

a third output coupler configured to receive rays propagated along the third guide between the third guide back side and the third guide front side and emit the received rays from the third guide front side, and optionally wherein

a) the first waveband and the second waveband correspond to a red waveband;

the third waveband and the fourth waveband correspond to a green waveband; and

the fifth waveband and the sixth waveband correspond to a blue waveband, and/or wherein

b) the device comprises an imaging device, wherein the imaging device includes the image source, the second image source, and the third image source.

12. The device of any one of claims 1 to 11, wherein:

the front side coating permits passage of light of a third waveband through the front side coating; and

the back side coating permits passage of light of a fourth wave band through the back side coating.

13. A method, comprising:

emitting rays from an image source;
coupling the rays from the image source into a guide comprising a guide front side with a front side coating and a guide back side with a back side coating;
reflecting a first portion of the rays between the guide front side and the guide back side based on refractive index interfaces of the guide front side and the guide back side;
reflecting a second portion of the rays between the front side coating and the back side coating based on a common reflective waveband of the front side coating and the back side coating; and
out-coupling the first portion and the second portion of the rays from the guide front side.

**14.** The method of claim 13, wherein:

a) the reflecting the first portion of the rays comprises reflecting rays within a first range of angles; and
the reflecting the second portion of the rays comprises reflecting rays within a second range of angles, and/or wherein
b) the reflecting the first portion of the rays comprises reflecting rays within a first range of angles; and
the reflecting the second portion of the rays comprises reflecting rays within a second range of angles that overlaps the first range of angles, and/or wherein
c) the reflecting the first portion of the rays comprises internal reflecting rays within a first range of angles; and
the reflecting the second portion of the rays comprises internally reflecting rays within a second range of angles that does not overlap the first range of angles.

**15.** The method of claim 13 or 14, comprising:

emitting second rays from a second image source;
coupling the second rays into a second guide comprising a second guide front side with a second front side coating and a second guide back side with a second back side coating;
reflecting a first portion of the second rays between the second guide front side and the second guide back side based on refractive index interfaces of the second guide front side and the second guide back side;
reflecting a second portion of the second rays between the second front side coating and the second back side coating based on a common reflective waveband of the second front side coating and the second back side coating; and
out-coupling the first portion and the second portion of the second rays from the second guide front side.

100

| Processor(s)<br>110 | | Display Device<br>130 |

| Storage Devices<br>120 | Other<br>I/O Devices<br>150 |

## FIG. 1

FIG. 2A

*FIG. 2B*

FIG. 3A

FIG. 3B

FIG. 4A

FIG. 4B

*FIG. 4C*

*FIG. 4D*

FIG. 5

FIG. 6A

FIG. 6B

Normal to Exit Surface

FIG. 7

Europäisches
Patentamt

European
Patent Office

Office européen
des brevets

# EUROPEAN SEARCH REPORT

**Application Number**

EP 23 19 8231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/250430 A1 (ROBBINS STEVE [US] ET AL) 26 September 2013 (2013-09-26) | 1-6,8,9, 13-15 | INV. G02B27/01 G02B6/00 |
| Y | * paragraphs [0029] – [0038]; figures 3,8 * | 10-12 | |
| X | US 2017/293141 A1 (SCHOWENGERDT BRIAN T [US] ET AL) 12 October 2017 (2017-10-12) * paragraphs [0057] – [0072]; figure 9 * | 1,7 | |
| Y | US 2021/088791 A1 (OLKKONEN JUUSO [FI] ET AL) 25 March 2021 (2021-03-25) * paragraphs [0036], [0037]; figure 4 * | 10-12 | |
| X | US 2018/373044 A1 (ALEXANDER STEFAN [CA] ET AL) 27 December 2018 (2018-12-27) | 1,2 | |
| A | * paragraph [0045]; figure 2 * | 3-15 | |
| X | US 2017/343812 A1 (BORDER JOHN N [US] ET AL) 30 November 2017 (2017-11-30) | 1,2 | |
| A | * paragraph [0139]; figure 34 * | 3-15 | TECHNICAL FIELDS SEARCHED (IPC) |
| A | WO 2021/091622 A1 (UNIV ARIZONA [US]) 14 May 2021 (2021-05-14) * paragraph [0097]; figure 11 * | 1 | G02B |

The present search report has been drawn up for all claims

| Place of search | Date of completion of the search | Examiner |
|---|---|---|
| Munich | 18 April 2024 | Stemmer, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 8231

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2024

| Patent document cited in search report | Publication date | Patent family member(s) | Publication date |
|---|---|---|---|
| US 2013250430 A1 | 26-09-2013 | NONE | |
| US 2017293141 A1 | 12-10-2017 | AU 2017246864 A1 | 04-10-2018 |
| | | CA 3018782 A1 | 12-10-2017 |
| | | CN 109073819 A | 21-12-2018 |
| | | EP 3440486 A1 | 13-02-2019 |
| | | IL 261829 A | 31-10-2018 |
| | | JP 7055751 B2 | 18-04-2022 |
| | | JP 2019514057 A | 30-05-2019 |
| | | KR 20180125600 A | 23-11-2018 |
| | | NZ 746486 A | 26-05-2023 |
| | | US 2017293141 A1 | 12-10-2017 |
| | | US 2021271080 A1 | 02-09-2021 |
| | | WO 2017176861 A1 | 12-10-2017 |
| US 2021088791 A1 | 25-03-2021 | CA 3083871 A1 | 27-06-2019 |
| | | CN 111512210 A | 07-08-2020 |
| | | EP 3701315 A1 | 02-09-2020 |
| | | FI 20176164 A1 | 23-06-2019 |
| | | JP 7368071 B2 | 24-10-2023 |
| | | JP 2021508082 A | 25-02-2021 |
| | | KR 20200104316 A | 03-09-2020 |
| | | US 2021088791 A1 | 25-03-2021 |
| | | WO 2019122521 A1 | 27-06-2019 |
| US 2018373044 A1 | 27-12-2018 | US 2018373043 A1 | 27-12-2018 |
| | | US 2018373044 A1 | 27-12-2018 |
| | | US 2018373045 A1 | 27-12-2018 |
| | | US 2018373046 A1 | 27-12-2018 |
| US 2017343812 A1 | 30-11-2017 | US 2017343810 A1 | 30-11-2017 |
| | | US 2017343812 A1 | 30-11-2017 |
| | | US 2017343813 A1 | 30-11-2017 |
| | | US 2017343814 A1 | 30-11-2017 |
| | | US 2017343815 A1 | 30-11-2017 |
| | | US 2017343816 A1 | 30-11-2017 |
| | | US 2017343817 A1 | 30-11-2017 |
| | | US 2017343822 A1 | 30-11-2017 |
| WO 2021091622 A1 | 14-05-2021 | US 2022390746 A1 | 08-12-2022 |
| | | WO 2021091622 A1 | 14-05-2021 |

EPO FORM P0459

For more details about this annex : see Official Journal of the European Patent Office, No. 12/82

**EP 4 439 151 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12666723